# EUROPEAN PATENT APPLICATION

(11) **EP 4 647 626 A1**
(43) Date of publication of application: **12.11.2025**
(21) Application number: 23914343.1
(22) Date of filing: 17.10.2023
(51) Int. Cl.: F16D 23/12, F16D 11/04

(54) **POWER COUPLING DEVICE, POWER ASSEMBLY AND VEHICLE**

(30) Priority: 05.01.2023 CN 202310013984
(71) Applicant: BYD Company Limited, Shenzhen, Guangdong 518118 (CN)
(72) Inventor: YANG, Shenglin, Shenzhen, Guangdong 518118 (CN); GAO, Yuan, Shenzhen, Guangdong 518118 (CN); CHEN, Yong, Shenzhen, Guangdong 518118 (CN); ZHANG, Hongming, Shenzhen, Guangdong 518118 (CN); XIE, Lihua, Shenzhen, Guangdong 518118 (CN)
(74) Representative: Mathys & Squire
(86) International application number: PCT/CN2023/124970
(87) International publication number: WO 2024/146205

(57) **Abstract**

A power coupling apparatus (1000), a powertrain (2000), and a vehicle (3000) are provided. The power coupling apparatus includes a drive assembly (200), a coupling member (400), an elastic member (300), a first power assembly (110), and a second power assembly (120). Two ends of the elastic member (300) respectively cooperate with the drive assembly (200) and the coupling member (400). The first power assembly (110) is normally drivably connected to the coupling member (400). When the power coupling apparatus is in a coupling state, the second power assembly (120) is drivably connected to the coupling member (400). When the power coupling apparatus is in a decoupling state, the second power assembly (120) is disconnected from the coupling member (400). The drive assembly drives the coupling member (400) by driving the elastic member (300), so that the power coupling apparatus is switched from the decoupling state to the coupling state.

## Description

### CROSS-REFERENCE TO RELATED APPLICATIONS

This application claims priority to Chinese Patent Application No. "202310013984.6", filed on January 05, 2023 by BYD Company Limited and entitled "POWER COUPLING APPARATUS, POWERTRAIN, AND VEHICLE".

### TECHNICAL FIELD

This application relates to the field of mechanical transmission technologies, and in particular, to a power coupling apparatus, a powertrain, and a vehicle.

### BACKGROUND

In existing synchronizers used for power coupling, if relative positions of a gear sleeve and an engagement tooth of a shift fork are mismatched during engagement, the gear sleeve and the engagement tooth collide and cannot be successfully engaged. In this case, the shift fork needs to repeatedly withdraw and re-engage until successful engagement is achieved. In other words, there are problems of slow engagement and susceptibility to damage.

### SUMMARY

This application is intended to resolve at least one of technical problems in the related technology to some extent.

Therefore, this application provides a power coupling apparatus, including: a drive assembly; an elastic member, wherein a first end of the elastic member cooperates with the drive assembly; a coupling member, wherein the coupling member cooperates with a second end of the elastic member; and a first power assembly and a second power assembly, wherein the first power assembly is normally drivably connected to the coupling member; the power coupling apparatus having a coupled state and a decoupled state; when the power coupling apparatus is in the coupled state, the second power assembly is drivably connected to the coupling member; and when the power coupling apparatus is in the decoupled state, the second power assembly is disconnected from the coupling member, wherein the drive assembly drives the coupling member by driving the elastic member, so that the power coupling apparatus is switched from the decoupled state to the coupled state.

When the power coupling apparatus provided in this application needs to be switched from the decoupled state to the coupled state, the drive assembly first applies a driving force to the elastic member, so that the elastic member is compressed, and then the elastic member generates a pushing force to drive the coupling member to be coupled to the second power assembly. Even if the coupling member and the second power assembly cannot be successfully engaged due to a mismatch between relative positions, it can still wait for the coupling member and the second power assembly to rotate to a position at which the coupling member and the second power assembly can be successfully engaged, to continuously drive the coupling member to be coupled to the second power assembly by using the pushing force of the elastic member, so that the drive assembly does not need to repeatedly withdraw and re-engage, power coupling between the first power assembly, the coupling member, and the second power assembly can be implemented by driving once, and the number of collisions between the coupling member and the second power assembly is reduced, which has advantages of rapid coupling and a long service life.

This application further provides a powertrain, including the power coupling apparatus provided in embodiments of this application.

This application further provides a vehicle, including the powertrain provided in embodiments of this application.

Additional aspects and advantages of this application are partially provided in the following descriptions, and some of the additional aspects and advantages will become apparent from the following descriptions, or be understood from practice of this application.

### BRIEF DESCRIPTION OF DRAWINGS

FIG. 1 is a schematic diagram of a vehicle according to an embodiment of this application;
FIG. 2 is a schematic cross-sectional view of a power coupling apparatus in a decoupling state according to an embodiment of this application;
FIG. 3 is a schematic cross-sectional view of a power coupling apparatus in a coupling state according to an embodiment of this application;
FIG. 4 is an exploded view of a power coupling apparatus according to an embodiment of this application;
FIG. 5 is a schematic diagram of assembly of a power coupling apparatus according to an embodiment of this application;
FIG. 6 is a schematic diagram of a positioning member of a power coupling apparatus according to an embodiment of this application; and
FIG. 7 is a schematic diagram of a positioning member of a power coupling apparatus according to an embodiment of this application.

### DESCRIPTION OF EMBODIMENTS

The following describes in detail embodiments of this application, and examples of the embodiments are shown in the accompanying drawings, where reference numerals that are identical or similar throughout represent identical or similar elements or elements having identical or similar functions. The following embodiments described with reference to the accompanying drawings are exemplary and are intended to explain this application, but should not be understood as a limitation on this application.

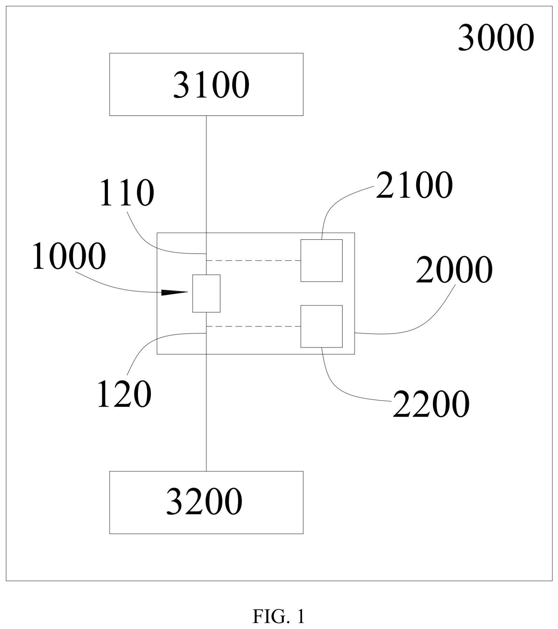

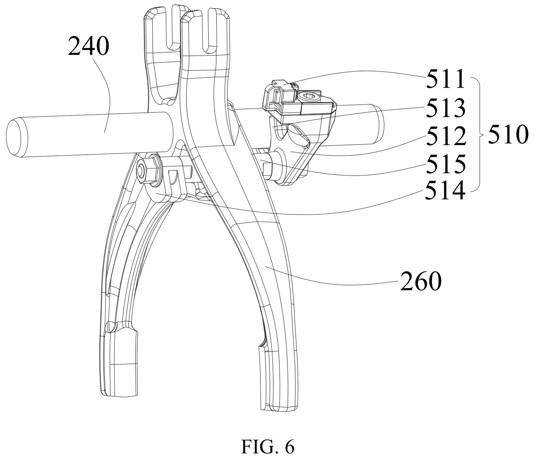

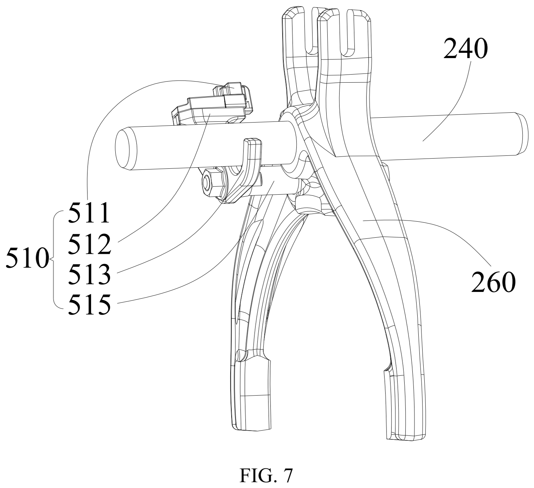

The following describes in detail a power coupling apparatus 1000, a powertrain 2000, and a vehicle 3000 according to embodiments of this application with reference to FIG. 1 to FIG. 7.

As shown in FIG. 1, in some embodiments, the vehicle 3000 includes the powertrain 2000, a first wheel 3100, and a second wheel 3200. The powertrain 2000 includes the power coupling apparatus 1000, a first motor 2100, and a second motor 2200. The power coupling apparatus 1000 includes a first power assembly 110 and a second power assembly 120. The first motor 2100 is drivably connected to the first power assembly 110, and the first wheel 3100 is drivably connected to the first power assembly 110. The second motor 2200 is drivably connected to the second power assembly 120, and the second wheel 3200 is drivably connected to the second power assembly 120. In other words, the vehicle 3000 uses the powertrain 2000 in a wheel-side independent drive form. The power coupling apparatus 1000 is configured to enable power coupling between the first power assembly 110 and the second power assembly 120, so that the powertrain 2000 changes from the wheel-side independent drive form to a centralized drive form, that is, the first motor 2100 and the second motor 2200 jointly drive the first wheel 3100 and the second wheel 3200, so that the power coupling apparatus can adapt to power requirements in different scenarios, and can be effectively used in escape scenarios under off-road working conditions.

In some embodiments, the vehicle 3000 may include two powertrains 2000, where one powertrain 2000 correspondingly drives two front wheels, and the other powertrain 2000 correspondingly drives two rear wheels, that is, the vehicle 3000 may be a four-wheel independent drive vehicle.

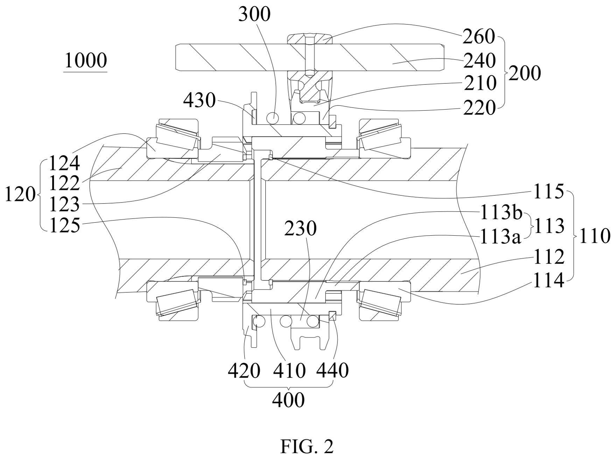

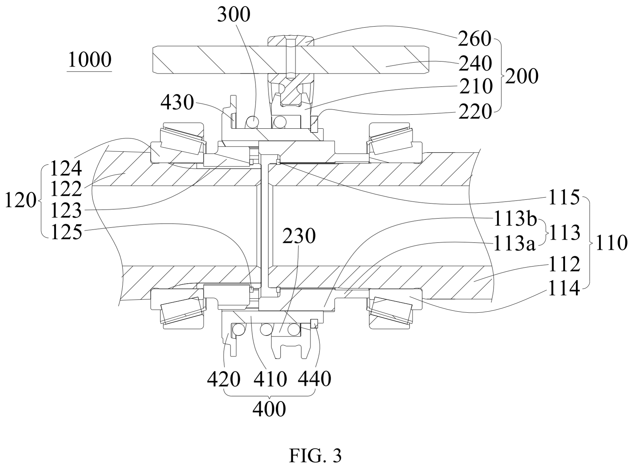

As shown in FIG. 2 and FIG. 3, the power coupling apparatus 1000 further includes a drive assembly 200, an elastic member 300, and a coupling member 400. A first end of the elastic member 300 cooperates with the drive assembly 200, a second end of the elastic member 300 cooperates with the coupling member 400, and the coupling member 400 is normally drivably connected to the first power assembly 110, that is, the coupling member 400 and the first power assembly 110 are always in a connection manner that can transfer power, for example, a splined connection and a gear connection. The power coupling apparatus 1000 has a coupled state and a decoupled state. When the power coupling apparatus 1000 is in the coupled state, as shown in FIG. 3, the second power assembly 120 is drivably connected to the coupling member 400. When the power coupling apparatus 1000 is in the decoupled state, as shown in FIG. 2, the second power assembly 120 is disconnected from the coupling member 400. The drive assembly 200 drives the coupling member 400 by driving the elastic member 300, so that the power coupling apparatus 1000 is switched from the decoupled state to the coupled state. In some embodiments, the elastic member 300 is of a helical spring structure.

When the power coupling apparatus 1000 provided in this application needs to be switched from the decoupled state to the coupled state, the drive assembly 200 first applies a driving force to the elastic member 300, so that the elastic member 300 is compressed, and then the elastic member 300 generates a pushing force to drive the coupling member 400 to be coupled to the second power assembly 120. Even if the coupling member 400 and the second power assembly 120 cannot be successfully engaged due to a mismatch between relative positions, it can still wait for the coupling member 400 and the second power assembly 120 to rotate to a position at which the coupling member and the second power assembly can be successfully engaged, to continuously drive, by using the pushing force of the elastic member 300, the coupling member 400 to be coupled to the second power assembly 120, so that the drive assembly 200 does not need to repeatedly withdraw and re-engage, power coupling between the first power assembly 110, the coupling member 400, and the second power assembly 120 can be implemented by driving once, and the number of collisions between the coupling member 400 and the second power assembly 120 is reduced, which has advantages of rapid coupling and long service life.

In some embodiments, the power coupling apparatus 1000 further has an intermediate state, and when the power coupling apparatus 1000 is in the intermediate state, the second power assembly 120 is in contact with and is not drivably connected to the coupling member 400, and the elastic member 300 is in a compressed state. In other words, in a process in which the power coupling apparatus 1000 is switched from the decoupled state to the coupled state, if the coupling member 400 and the second power assembly 120 collide due to a mismatch between relative positions, that is, the power coupling apparatus 1000 is in the intermediate state, the coupling member 400 and the second power assembly 120 are in contact but cannot drive power. In this case, the elastic member 300 continuously applies a pushing force on the coupling member 400 due to compression, and pushes the coupling member 400 to a position at which the coupling member is drivably connected to the second power assembly 120 when waiting for the coupling member 400 and the second power assembly 120 to rotate to a position at which the coupling member and the second power assembly can be successfully engaged.

As shown in FIG. 2 and FIG. 3, in some embodiments, the coupling member 400 includes a first sliding sleeve 410 and a first retaining portion 420, the first sliding sleeve 410 is movable relative to the first power assembly 110 and the second power assembly 120, and the first retaining portion 420 is fastened to an outer side of the first sliding sleeve 410. The drive assembly 200 includes a second sliding sleeve 210, a second retaining portion 220 is disposed on an inner side of the second sliding sleeve 210, the second sliding sleeve 210 is relatively movably sleeved on the first sliding sleeve 410, and the first retaining portion 420 is disposed opposite to the second retaining portion 220. The elastic member 300 is sleeved on the first sliding sleeve 410, and the elastic member 300 fits between the first retaining portion 420 and the second retaining portion 220. Sleeving arrangement between the second sliding sleeve 210, the elastic member 300, and the first sliding sleeve 410, and cooperation arrangement between the second retaining portion 220, the elastic member 300, and the first retaining portion 420 are simple, effective, and reliable to implement sequential push of the drive assembly 200, the elastic member 300, and the coupling member 400.

As shown in FIG. 2 and FIG. 3, in some embodiments, a first positioning groove 430 is disposed on a side of the first retaining portion 420 that faces the second retaining portion 220, and the second end of the elastic member 300 cooperates with the first positioning groove 430. In some embodiments, a second positioning groove 230 is defined between an outer sidewall of the first sliding sleeve 410, a side of the second retaining portion 220 that faces the first retaining portion 420, and an inner sidewall of the second sliding sleeve 210, and the first end of the elastic member 300 cooperates with the second positioning groove 230. The first end or the second end of the elastic member 300 separately cooperates with a groove-like structure formed on the coupling member 400 or the drive assembly 200, thereby effectively avoiding a problem such as release or jitter of the elastic member 300, and improving structural reliability of the power coupling apparatus 1000.

As shown in FIG. 2 to FIG. 4, in some embodiments, the coupling member 400 includes a third retaining portion 440, the third retaining portion 440 is adapted to cooperate with the drive assembly 200, and the third retaining portion 440 is located on a side of the drive assembly 200 that faces away from the elastic member 300. The drive assembly 200 drives the coupling member 400 by driving the third retaining portion 440, so that the power coupling apparatus 1000 is switched from the coupled state to the decoupled state. Because a process in which the power coupling apparatus 1000 is switched from the coupled state to the decoupled state may be directly performed, the drive assembly 200 may push, by pushing the third retaining portion 440, the coupling member 400 directly from a direction opposite to a direction of compressing the elastic member 300, so that the structure is simple and reliable.

In some embodiments, when the power coupling apparatus 1000 is in the coupled state, the elastic member 300 is in a compressed state. The elastic member 300 is in the compressed state, that is, the coupling member 400 always tends to move toward the first power assembly 110, but in this case, the third retaining portion 440 cooperates with the drive assembly 200 to play a limiting role, thereby fixing a position of the coupling member 400. This ensures coupling stability of the power coupling apparatus 1000 in the coupled state. In some embodiments, regardless of which state the power coupling apparatus 1000 is in, the elastic member 300 is normally in a compressed state, that is, the elastic member 300 is always compressed, thereby preventing the coupling member 400 from easily shaking.

As shown in FIG. 2 and FIG. 3, in some embodiments, the third retaining portion 440 is fastened to the outer side of the first sliding sleeve 410, and the third retaining portion 440 is located on a side of the second retaining portion 220 that faces away from the elastic member 300.

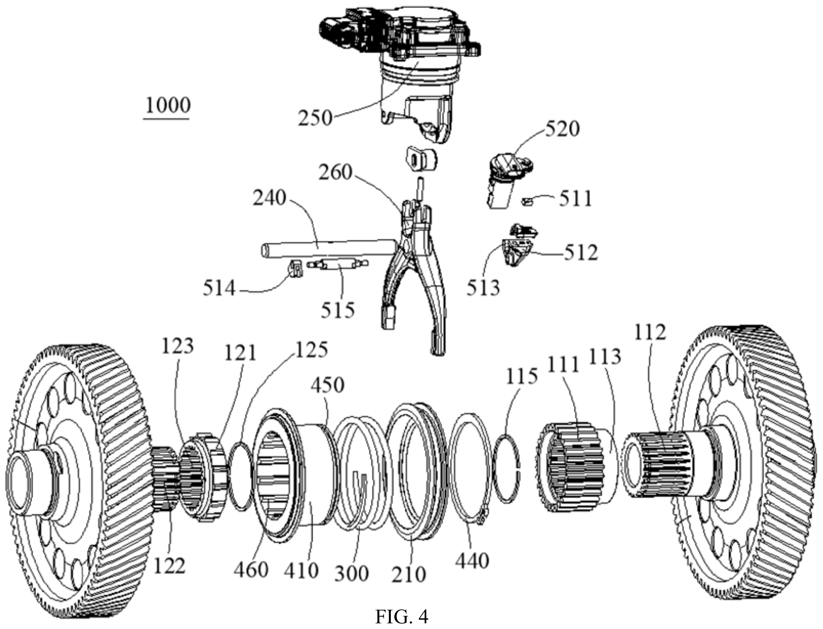

As shown in FIG. 4, in some embodiments, a third positioning groove 450 is disposed on the first sliding sleeve 410, the third retaining portion 440 is of a snap spring structure, and the third retaining portion 440 is clamped in the third positioning groove 450. The third retaining portion 440 is disposed to have a snap spring structure, so as to facilitate assembly and disassembly between the third retaining portion 440 and the first sliding sleeve 410, and further facilitate assembly and disassembly between the second sliding sleeve 210 and the first sliding sleeve 410.

In some embodiments, a movement stroke of the coupling member 400 is 10 mm to 14 mm. If the stroke of the coupling member 400 is excessively short (for example, less than 10 mm), mistaken coupling between the coupling member 400 and the second power assembly 120 is easily caused by jitter of the coupling member 400 and the elastic member 300. If the stroke of the coupling member 400 is excessively long (for example, greater than 14 mm), spatial compactness and coupling efficiency of the power coupling apparatus 1000 are affected.

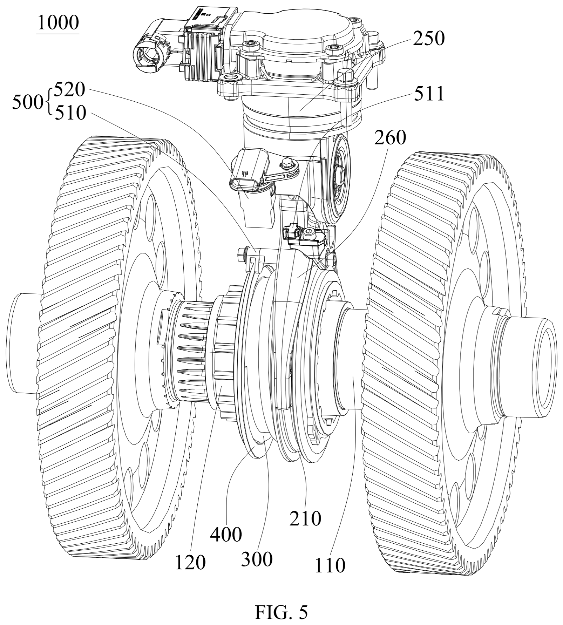

As shown in FIG. 5, in some embodiments, the power coupling apparatus 1000 further includes a positioning assembly 500, and the positioning assembly 500 includes a positioning member 510 and a position receiver 520. The positioning member 510 is disposed on the coupling member 400, and the position receiver 520 is fixedly disposed and is configured to receive position information of the positioning member 510. In some embodiments, the position receiver 520 is fixedly connected to a housing of the powertrain 2000. Because the position of the coupling member 400 can accurately reflect whether the power coupling apparatus 1000 is in the coupling state or the decoupling state, the positioning member 510 needs to be disposed on the coupling member 400 rather than the drive assembly 200.

As shown in FIG. 4 to FIG. 7, in some embodiments, the positioning member 510 includes a magnetic body 511. In other words, the position receiver 520 obtains a position of the magnetic body 511 through a magnetic field change, and the positioning member 510 and the position receiver 520 do not need to set transmission and reception of a signal. Therefore, the structure is simple and the costs are low.

As shown in FIG. 4, FIG. 6, and FIG. 7, in some embodiments, the positioning member 510 further includes a magnetic body bracket 512, the magnetic body bracket 512 extends from the coupling member 400 to the position receiver 520, and the magnetic body 511 is disposed at an end of the magnetic body bracket 512 that is close to the position receiver 520. In an actual design of structural arrangement, there is generally a large distance between the coupling member 400 and the position receiver 520, and when a position change is detected through a magnetic field change, a distance between the magnetic body 511 and the position receiver 520 needs to be sufficiently short (for example, less than 8 mm) to ensure a detection precision requirement. Therefore, the magnetic body bracket 512 is disposed extending from the coupling member 400 to the position receiver 520, so that a distance between the magnetic body 511 and the position receiver 520 can be effectively shortened, thereby effectively ensuring precision of position estimation of the coupling member 400. In some embodiments, in a process in which the drive assembly 200 drives the coupling member 400, the distance between the magnetic body 511 and the position receiver 520 varies between 3 mm and 7 mm.

As shown in FIG. 4, FIG. 6, and FIG. 7, in some embodiments, an anti-rotation limiting portion 513 is disposed on the magnetic body bracket 512. To avoid rotation of the magnetic body bracket 512 due to gravity influence of the magnetic body bracket, the anti-rotation limiting portion 513 is disposed to limit rotation of the magnetic body bracket 512.

As shown in FIG. 4, FIG. 6, and FIG. 7, in some embodiments, the drive assembly 200 further includes a first guide shaft 240, the second sliding sleeve 210 is movable along an axis of the first guide shaft 240, and the anti-rotation limiting portion 513 is formed into a groove-shaped structure and cooperates with the first guide shaft 240, so as to limit rotation of the magnetic body bracket 512.

As shown in FIG. 4, in some embodiments, a first engagement tooth 111 is disposed on the first power assembly 110, a second engagement tooth 121 is disposed on the second power assembly 120, and a third engagement tooth 460 is disposed on the coupling member 400. The first engagement tooth 111 is normally engaged with the third engagement tooth 460. When the power coupling apparatus 1000 is in the coupled state, the second engagement tooth 121 is engaged with and connected to the third engagement tooth 460. When the power coupling apparatus 1000 is in the decoupled state, the second engagement tooth 121 is disconnected from the third engagement tooth 460.

In some embodiments, the third engagement tooth 460 is externally sleeved on the first engagement tooth 111, so that the first power assembly 110 is drivably connected to the coupling member 400 at an equal rotational speed. When the power coupling apparatus 1000 is in the coupled state, the third engagement tooth 460 is externally sleeved on the second engagement tooth 121, so that the second power assembly 120 is drivably connected to the coupling member 400 at an equal rotational speed. In other words, both the engagement connection between the third engagement tooth 460 and the first engagement tooth 111 and the engagement connection between the third engagement tooth 460 and the second engagement tooth 121 are splined connections, so that drivable connections at an equal rotational speed are implemented between the three engagement teeth.

In some other embodiments, the third engagement tooth 460 and the first engagement tooth 111 may alternatively have a gear connection in mutual external engagement with each other. The third engagement tooth 460 and the second engagement tooth 121 may alternatively have a gear connection in mutual external engagement with each other. In other words, the third engagement tooth 460 serves as an idler gear between the first engagement tooth 111 and the second engagement tooth 121, and when a tooth count of the first engagement tooth 111 is equal to that of the second engagement tooth 121, driving at an equal rotational speed can be implemented between the first engagement tooth 111 and the second engagement tooth 121.

As shown in FIG. 4, in some embodiments, the first power assembly 110 includes a first power shaft 112 and a first gear sleeve 113. The first gear sleeve 113 is externally sleeved on the first power shaft 112. The first engagement tooth 111 is formed on an outer circumference of the first gear sleeve 113. The second power assembly 120 includes a second power shaft 122 and a second gear sleeve 123. The second gear sleeve 123 is externally sleeved on the second power shaft 122, and the second engagement tooth 121 is formed on an outer circumference of the second gear sleeve 123. In some embodiments, the first power shaft 112 is separately connected to the first motor 2100 and the first wheel 3100, and the second power shaft 122 is separately connected to the second motor 2200 and the second wheel 3200. In some embodiments, the first gear sleeve 113 is drivably connected to the first power shaft 112 through a spline structure, and the second gear sleeve 123 is drivably connected to the second power shaft 122 through a spline structure.

As shown in FIG. 2 to FIG. 4, in some embodiments, the first power assembly 110 further includes a first gear sleeve retaining portion 114 and a first snap spring 115, and the first gear sleeve retaining portion 114, the first gear sleeve 113, and the first snap spring 115 are successively disposed on an outer circumference of the first power shaft 112. The second power assembly 120 further includes a second gear sleeve retaining portion 124 and a second snap spring 125, and the second gear sleeve retaining portion 124, the second gear sleeve 123, and the second snap spring 125 are successively disposed on an outer circumference of the second power shaft 122. The first gear sleeve retaining portion 114 and the first snap spring 115 respectively limit two sides of the first gear sleeve 113, so as to facilitate assembly and disassembly of the first gear sleeve 113. The second gear sleeve retaining portion 124 and the second snap spring 125 respectively limit two sides of the second gear sleeve 123, so as to facilitate assembly and disassembly of the second gear sleeve 123. In some embodiments, at least one of the first gear sleeve retaining portion 114 and the second gear sleeve retaining portion 124 is a bearing.

As shown in FIG. 2 and FIG. 3, in some embodiments, the first gear sleeve 113 includes an inner ring 113a and an outer ring 113b. A side of the inner ring 113a that is close to the first gear sleeve retaining portion 114 abuts against and cooperates with the first gear sleeve retaining portion 114, and a side of the outer ring 113b that is close to the first gear sleeve retaining portion 114 is spaced apart from the first gear sleeve retaining portion 114. The first engagement tooth 111 is formed on the outer circumference of the first gear sleeve 113, that is, is formed on the outer ring 113b. Therefore, when the inner ring 113a abuts against and cooperates with the first gear sleeve retaining portion 114, the outer ring 113b is spaced apart from the first gear sleeve retaining portion 114, so that a limitation on a side of the first gear sleeve 113 can be implemented, and a specific spatial margin can be reserved to avoid collision between the coupling member 400 and the first gear sleeve retaining portion 114.

As shown in FIG. 2 and FIG. 3, in some embodiments, a side of the inner ring 113a that is far away from the first gear sleeve retaining portion 114 abuts against and cooperates with the first snap spring 115, and a side of the outer ring 113b that is far away from the first gear sleeve retaining portion 114 protrudes relative to the side of the inner ring 113a that is far away from the first gear sleeve retaining portion 114. The outer ring 1-3b protrudes relative to the inner ring 1-3a, so that a length of the first engagement tooth 111 is increased, thereby ensuring cooperation stability between the first engagement tooth 111 and the third engagement tooth 460 of the coupling member 400.

In some embodiments, a probability of successful cooperation between the second engagement tooth 121 and the third engagement tooth 460 may be represented by (b-a)*z/d, where a is a tooth width of the second engagement tooth 121, b is a tooth gap of the third engagement tooth 460, z is a tooth count of the second engagement tooth 121, and d is a reference diameter of each of the second engagement tooth 121 and the third engagement tooth 460. A value range of the probability (b-a)*z/d of successful cooperation between the second engagement tooth 121 and the third engagement tooth 460 is 0.5 to 0.8. In some embodiments, a tooth count of the third engagement tooth 460 is greater than the tooth count of the second engagement tooth 121, or the tooth count of the third engagement tooth 460 is less than the tooth count of the second engagement tooth 121. This helps increase the probability of successful cooperation between the second engagement tooth 121 and the third engagement tooth 460.

As shown in FIG. 4 and FIG. 5, in some embodiments, the drive assembly 200 further includes a drive member 250 and a shift fork 260, the second sliding sleeve 210 is fixedly connected to the shift fork 260, the shift fork 260 is disposed on the first guide shaft 240 and is movable along the axis of the first guide shaft 240, and the drive member 250 is configured to drive the shift fork 260 to move. The drive member 250 may be a motor, and drives, through a drive mechanism of a lead screw and a lead screw nut, the shift fork 260 to move, so as to drive the second sliding sleeve 210 to move, thereby pushing the elastic member 300 and the coupling member 400. In addition, the first guide shaft 240 is disposed to ensure movement stability of the shift fork 260 and the second sliding sleeve 210.

As shown in FIG. 4, FIG. 6, and FIG. 7, in some embodiments, the positioning member 510 further includes a clamping member 514 and a second guide shaft 515, both the clamping member 514 and the magnetic body bracket 512 are disposed on the second guide shaft 515, the clamping member 514 clamps the first retaining portion 420, and the second guide shaft 515 is adapted to move along an axis of the second guide shaft. In some embodiments, the second guide shaft 515 movably passes through the shift fork 260, thereby improving structural compactness of the power coupling apparatus 1000.

Other components and operations of the power coupling apparatus 1000, the powertrain 2000, and the vehicle 3000 provided in embodiments of this application are all known to a person of ordinary skill in the art. Details are not described herein again.

In the description of this application, it should be understood that the orientation or positional relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, is an orientation or positional relationship shown based on the accompanying drawings, and is only for ease of describing this application and simplifying the descriptions, rather than indicating or implying that the apparatus or element referred to must have a specific orientation or be constructed and operated in a specific orientation, and therefore should not be understood as a limitation on this application.

In addition, terms "first" and "second" are merely used for description purposes, and should not be understood as indicating or implying relative importance or implicitly indicating the number of technical features indicated. Therefore, a feature defined by "first" or "second" may explicitly or implicitly include one or more such features. In the descriptions of this application, "a plurality of" means two or more, unless otherwise explicitly defined.

In this application, unless otherwise explicitly specified and defined, terms such as "mount", "interconnect", "connect", and "fix" should be understood in a broad sense, for example, may be understood as a fixed connection, a detachable connection, or an integrated connection, may be understood as a mechanical connection, or an electrical connection, or may be understood as a direct connection or an indirect connection through an intermediate medium, or may be understood as internal communication between two elements or an interaction relationship between two elements. A person of ordinary skill in the art may understand specific meanings of the foregoing terms in this application based on specific situations.

In this application, unless otherwise explicitly specified and defined, that the first feature is "above" or "below" the second feature may be that the first feature and the second feature are in direct contact, or the first feature and the second feature are in indirect contact through an intermediate medium. In addition, that the first feature is "above", "over", or "on top of" the second feature may be that the first feature is directly above or obliquely above the second feature, or merely indicates that a level height of the first feature is higher than that of the second feature. That the first feature is "below", "under", or "beneath" the second feature may be that the first feature is directly below or obliquely below the second feature, or merely indicates that a level height of the first feature is lower than that of the second feature.

In descriptions of this specification, reference to descriptions of the terms such as "one embodiment", "some embodiments", "example", "specific example", or "some examples" means that specific features, structures, materials, or characteristics described with reference to the embodiment or example are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable manner. In addition, when there is no contradiction, a person skilled in the art may incorporate and combine different embodiments or examples described in this specification and features of different embodiments or examples.

Although embodiments of this application are shown and described above, it may be understood that the foregoing embodiments are exemplary and should not be understood as a limitation on this application, and changes, modifications, replacements, and variations may be made by a person of ordinary skill in the art to the foregoing embodiments within the scope of this application.

## Claims

1. A power coupling apparatus, comprising:
a drive assembly;
an elastic member, wherein a first end of the elastic member cooperates with the drive assembly;
a coupling member, wherein the coupling member cooperates with a second end of the elastic member; and
a first power assembly and a second power assembly, wherein the first power assembly is normally drivably connected to the coupling member; the power coupling apparatus has a coupled state and a decoupled state; when the power coupling apparatus is in the coupled state, the second power assembly is drivably connected to the coupling member; and when the power coupling apparatus is in the decoupled state, the second power assembly is disconnected from the coupling member, wherein
the drive assembly drives the coupling member by driving the elastic member, so that the power coupling apparatus is switched from the decoupled state to the coupled state.

2. The power coupling apparatus according to claim 1, wherein the power coupling apparatus further has an intermediate state; and when the power coupling apparatus is in the intermediate state, the second power assembly is in contact with and is not drivably connected to the coupling member, and the elastic member is in a compressed state.

3. The power coupling apparatus according to claim 1 or 2, wherein
the coupling member comprises a first sliding sleeve and a first retaining portion, the first retaining portion is fastened to an outer side of the first sliding sleeve, and the first sliding sleeve is movable relative to the first power assembly and the second power assembly;
the drive assembly comprises a second sliding sleeve and a second retaining portion, the first retaining portion is disposed opposite to the second retaining portion, the second retaining portion is disposed on an inner side of the second sliding sleeve, and the second sliding sleeve is relatively movably sleeved on the first sliding sleeve; and
the elastic member is sleeved on the first sliding sleeve, and the elastic member fits between the first retaining portion and the second retaining portion.

4. The power coupling apparatus according to claim 3, wherein a first positioning groove is disposed on a side of the first retaining portion that faces the second retaining portion, and the second end of the elastic member cooperates with the first positioning groove; and/or a second positioning groove is defined between an outer sidewall of the first sliding sleeve, a side of the second retaining portion that faces the first retaining portion, and an inner sidewall of the second sliding sleeve, and the first end of the elastic member cooperates with the second positioning groove.

5. The power coupling apparatus according to claim 1, wherein
the coupling member comprises a third retaining portion, the third retaining portion is adapted to cooperate with the drive assembly, and the third retaining portion is located on a side of the drive assembly that faces away from the elastic member, wherein
the drive assembly drives the coupling member by driving the third retaining portion, so that the power coupling apparatus is switched from the coupled state to the decoupled state.

6. The power coupling apparatus according to claim 5, wherein when the power coupling apparatus is in the coupled state, the elastic member is in a compressed state.

7. The power coupling apparatus according to claim 5 or 6, wherein the coupling member further comprises a first sliding sleeve, the first sliding sleeve is movable relative to the first power assembly and the second power assembly, and the third retaining portion is fastened to an outer side of the first sliding sleeve; and
the drive assembly comprises a second sliding sleeve, a second retaining portion is disposed on an inner side of the second sliding sleeve, and the second sliding sleeve is relatively movably sleeved on the first sliding sleeve, wherein
the third retaining portion is located on a side of the second retaining portion that faces away from the elastic member.

8. The power coupling apparatus according to claim 7, wherein a third positioning groove is disposed on the first sliding sleeve, the third retaining portion is of a snap spring structure, and the third retaining portion is clamped in the third positioning groove.

9. The power coupling apparatus according to any one of claims 1 to 8, wherein a movement stroke of the coupling member is 10 mm to 14 mm.

10. The power coupling apparatus according to any one of claims 1 to 8, further comprising a positioning assembly, wherein the positioning assembly comprises a positioning member and a position receiver, the positioning member is disposed on the coupling member, and the position receiver is fixedly disposed and is configured to receive position information of the positioning member.

11. The power coupling apparatus according to claim 10, wherein the positioning member comprises a magnetic body.

12. The power coupling apparatus according to claim 11, wherein the positioning member further comprises a magnetic body bracket, the magnetic body bracket extends from the coupling member to the position receiver, and the magnetic body is disposed at an end of the magnetic body bracket that is close to the position receiver.

13. The power coupling apparatus according to claim 12, wherein an anti-rotation limiting portion is disposed on the magnetic body bracket.

14. The power coupling apparatus according to claim 13, wherein the drive assembly comprises a first guide shaft and the second sliding sleeve, the second sliding sleeve is movable along an axis of the first guide shaft, and the second sliding sleeve cooperates with the first end of the elastic member; and
the anti-rotation limiting portion is formed into a groove-shaped structure and cooperates with the first guide shaft.

15. The power coupling apparatus according to claim 12, wherein the coupling member comprises the first retaining portion, and the first retaining portion is disposed in cooperation with the second end of the elastic member; and
the positioning member further comprises a clamping member and a second guide shaft, both the clamping member and the magnetic body bracket are disposed on the second guide shaft, the clamping member clamps the first retaining portion, and the second guide shaft is adapted to move along an axis of the second guide shaft.

16. The power coupling apparatus according to any one of claims 11 to 15, wherein in a process of driving the coupling member by the drive assembly, a distance between the magnetic body and the position receiver varies between 3 mm and 7 mm.

17. The power coupling apparatus according to any one of claims 1 to 16, wherein a first engagement tooth is disposed on the first power assembly, a second engagement tooth is disposed on the second power assembly, and a third engagement tooth is disposed on the coupling member;
the first engagement tooth is normally engaged with the third engagement tooth; and
when the power coupling apparatus is in the coupled state, the second engagement tooth is engaged with the third engagement tooth; and when the power coupling apparatus is in the decoupled state, the second engagement tooth is not engaged with the third engagement tooth.

18. The power coupling apparatus according to claim 17, wherein the third engagement tooth is externally sleeved on the first engagement tooth, so that the first power assembly is drivably connected to the coupling member at an equal rotational speed; and
when the power coupling apparatus is in the coupled state, the third engagement tooth is externally sleeved on the second engagement tooth, so that the second power assembly is drivably connected to the coupling member at an equal rotational speed.

19. The power coupling apparatus according to claim 18, wherein the first power assembly comprises a first power shaft and a first gear sleeve, the first gear sleeve is externally sleeved on the first power shaft, and the first engagement tooth is formed on an outer circumference of the first gear sleeve; and the second power assembly comprises a second power shaft and a second gear sleeve, the second gear sleeve is externally sleeved on the second power shaft, and the second engagement tooth is formed on an outer circumference of the second gear sleeve.

20. The power coupling apparatus according to claim 19, wherein the first power assembly further comprises a first gear sleeve retaining portion and a first snap spring, and the first gear sleeve retaining portion, the first gear sleeve, and the first snap spring are successively disposed on an outer circumference of the first power shaft; and the second power assembly further comprises a second gear sleeve retaining portion and a second snap spring, and the second gear sleeve retaining portion, the second gear sleeve, and the second snap spring are successively disposed on an outer circumference of the second power shaft.

21. The power coupling apparatus according to claim 20, wherein at least one of the first gear sleeve retaining portion and the second gear sleeve retaining portion is a bearing.

22. The power coupling apparatus according to claim 20 or 21, wherein the first gear sleeve comprises an inner ring and an outer ring;
a side of the inner ring that is close to the first gear sleeve retaining portion abuts against and cooperates with the first gear sleeve retaining portion, and a side of the outer ring that is close to the first gear sleeve retaining portion is spaced apart from the first gear sleeve retaining portion; and/or
a side of the inner ring that is far away from the first gear sleeve retaining portion abuts against and cooperates with the first snap spring, and a side of the outer ring that is far away from the first gear sleeve retaining portion protrudes relative to the side of the inner ring that is far away from the first gear sleeve retaining portion.

23. The power coupling apparatus according to any one of claims 18 to 22, wherein a tooth count of the third engagement tooth is greater than a tooth count of the second engagement tooth, or the tooth count of the third engagement tooth is less than the tooth count of the second engagement tooth.

24. The power coupling apparatus according to any one of claims 18 to 22, wherein a tooth width of the second engagement tooth is a, a tooth gap of the third engagement tooth is b, the tooth count of the second engagement tooth is z, and a reference diameter of each of the second engagement tooth and the third engagement tooth is d, wherein a value range of (b-a)*z/d is 0.5 to 0.8.

25. The power coupling apparatus according to any one of claims 1 to 24, wherein the drive assembly comprises a drive member, the second sliding sleeve, a shift fork, and the first guide shaft, the second sliding sleeve cooperates with the first end of the elastic member, the second sliding sleeve is fixedly connected to the shift fork, the shift fork is disposed on the first guide shaft and is movable along the axis of the first guide shaft, and the drive member is configured to drive the shift fork to move.

26. A powertrain, comprising the power coupling apparatus according to any one of claims 1 to 25, a first motor, and a second motor, wherein the first motor is drivably connected to the first power assembly, and the second motor is drivably connected to the second power assembly.

27. A vehicle, comprising the powertrain according to claim 26, a first wheel, and a second wheel, wherein the first wheel is drivably connected to the first power assembly, and the second wheel is drivably connected to the second power assembly.
